# EUROPEAN PATENT APPLICATION

(11) **EP 2 138 076 A2**
(43) Date of publication of application: **30.12.2009**
(21) Application number: 09160587.3
(22) Date of filing: 19.05.2009
(51) Int. Cl.: A47J 27/08

(54) **Vessel for a pressure cooker**

(30) Priority: 19.05.2008 ES 200801040 U
(71) Applicant: Fagor, S. Coop., 20500 Arrasate-Mondragon (ES)
(72) Inventor: Bergara Azpirotz, Anartz, 20120, Lazkao (Gipuzkoa) (ES)
(74) Representative: Igartua, Ismael

(57) **Abstract**

"Vessel for a pressure cooker, comprising a substantially cylindrical and hollow outline (3) and a substantially circular base (2) disposed on one of the ends of said outline (3), the outline (3) and the base (2) defining a substantially cylindrical vessel space (1a) with a specific cavity radius (Rc) in relation to an imaginary central axis (4) disposed in the centre of said vessel space (1a) and with a specific height (H) in relation to the base (2), the vessel (1) also comprising a plurality of intercalated ramps (10) and flanges (13), the ramps (10) and flanges (13) extending from one end of said outline (3) opposite to the end where the base (2) is disposed, in a direction substantially perpendicular to said outline (3), moving away from the imaginary central axis (4) and said ramps (10) and said flanges (13) being curved and concentric in relation to the central axis (4). The flanges (13) comprise a curved form, the end of said flanges (13) being in a height (Hv) in relation to the base (2) that is lower than the height (H) of the vessel (1)."

## Description

### TECHNICAL FIELD

The present invention relates to a vessel for pressure cookers and more specifically to a vessel for pressure cookers that comprise a bayonet closure system.

### PRIOR ART

Pressure cookers comprise a vessel in which food is disposed, and a lid for covering said vessel. During its use, the lid covers the vessel and withstands specific pressures. Said pressure cooker must be designed to withstand high pressures to ensure that the lid does not come off the vessel while it is being used, thereby preventing possible injury.

The vessel of a pressure cooker with a bayonet closure system comprises a plurality of ramps and the lid comprises an equal number of counter-ramps that cooperate with said ramps to keep said vessel closed, as is disclosed, for example, in ES 0211846 U.

### BRIEF DISCLOSURE OF THE INVENTION

It is the object of this invention to provide a vessel for a pressure cooker as defined in the claims.

The vessel of the invention comprises a substantially cylindrical and hollow outline and a substantially circular base disposed on one of the ends of said outline, the outline and the base defining a substantially cylindrical space with a specific cavity radius in relation to an imaginary central axis disposed in the centre of said space, and with a specific height in relation to the base.

The vessel also comprises a plurality of ramps and a flange disposed between every two ramps, the ramps and the flanges extending from one end of said outline, opposite to the end where the base is disposed, in a direction substantially perpendicular to the imaginary central axis, moving away from said imaginary central axis. The flanges extend to a specific interior radius and the ramps extend to a specific exterior radius. The flanges comprise a curved form, the end of said flanges being in a height in relation to the base that is lower than the height of the vessel.

As a result, the pressure cooker possesses greater strength than a pressure cookers of the prior art, with the pressure cooker comprising a vessel of this type being capable of withstanding, during its use, greater pressures with a same specific thickness of said vessel, or enabling the reduction of said specific thickness while withstanding the same pressures, with the lid keeping said vessel closed. As the specific thickness may be reduced, the cost of manufacturing the vessel may also be reduced.

These and other advantages and characteristics of the invention will be made evident in the light of the drawings and the detailed description thereof.

### DESCRIPTION OF THE DRAWINGS

Figure 1 shows a ground view of a first embodiment of the vessel of the invention.
Figure 2 shows a side view of the vessel of Figure 1, according to the II-II section line.
Figure 3 shows a ground view of a second embodiment of the vessel of the invention.

### DETAILED DISCLOSURE OF THE INVENTION

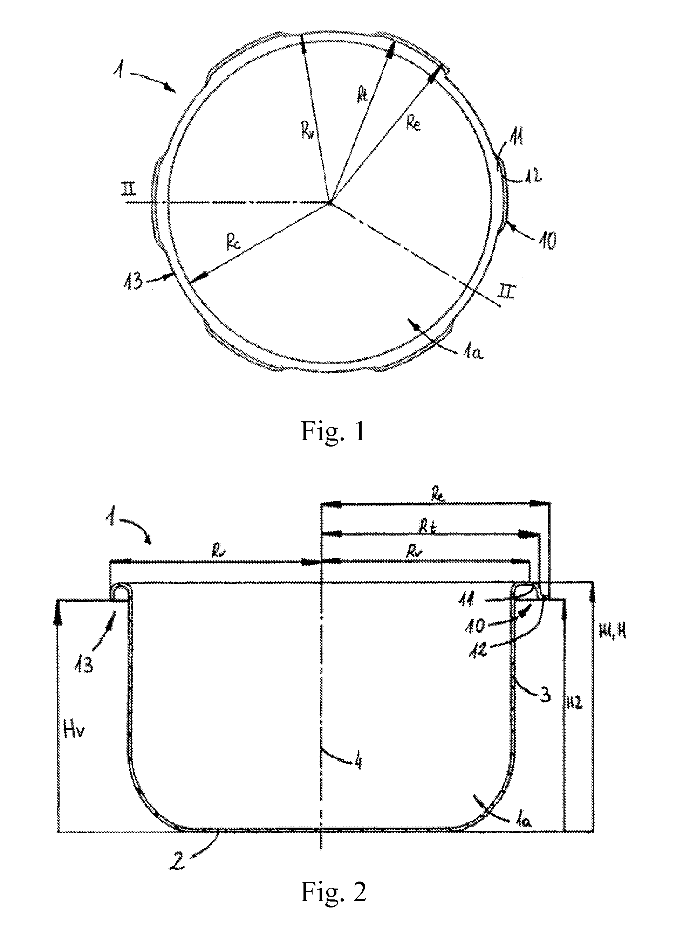

Figures 1 and 2 show an embodiment of the vessel 1 of the invention, designed for use in pressure cookers. The vessel 1 comprises a substantially cylindrical and hollow outline 3, a substantially circular base 2 disposed on one of the ends of said outline 3, the outline 3 and the base 2 defining a substantially cylindrical vessel space 1a with a cavity radius Rc in relation to an imaginary central axis 4 in the centre of said vessel space 1 a, and with a height H in relation to the base 2. Said cavity radius Rc and the height H depend on the required dimensions of the corresponding vessel 1 for a pressure cooker. Both the base 2 and the outline 3 comprise a specific thickness of material that preferably corresponds with a type of stainless steel. Generally speaking, pressure cookers comprise a thickness of no less than 1.2mm.

The vessel 1 also comprises a plurality of ramps 10, preferably equidistant to each other, and a flange 13 between every two ramps 10, preferably comprising six ramps 10 and six flanges 13, the number of ramps 10 and flanges 13 always being the same and both the ramps 10 and the flanges 13 corresponding with curved sections concentric to the imaginary central axis 4. In addition to a vessel 1, a pressure cooker comprises a lid (not shown in the figures) that cooperates with the ramps 10 of said vessel 1 in order to keep said pressure cooker (the space 1 a) closed while it is being used. The ramps 10 and the flanges 13 extend from one end of said outline 3 opposite to the end where the base 2 is disposed, in a direction substantially perpendicular to the imaginary central axis 4, moving away from said central axis 4 as shown in Figure 2. The flanges 13 extend to a specific radius Rv in relation to the central axis 4 and comprise a curved form, the end of said flanges 13 being in a height Hv in relation to the base 2 that is lower than the height H of the vessel 1, as shown in Figure 2. As can be seen in said Figure 2, the end of the flanges 13 is oriented in a direction substantially perpendicular to the base 2.

On the other hand, the ramps 10 extend to a specific exterior radius Re in relation to said central axis 4. Each ramp 10 is divided into a first section 11 and a second section 12, that comprise different heights H1 and H2 in relation to a base 2 of the vessel 1, the first section 11 extending from the cavity radius Rc to an intermediate radius Rt comprised between the exterior radius Re and the radius Rv of the flanges 13, and the second section 12 extending from said intermediate radius Rt to the exterior radius Re. Each ramp 10 is thus substantially step-shaped, a first height H1 of the first section 11 corresponding with the height H of the vessel space 1a. These features also contribute to make the pressure cooker stronger.

In a preferred embodiment of the vessel 1, the height H1 of the first section 11 in relation to the base 2 is greater than the height H2 of the second section 12 of the vessel 1, as shown in Figure 2. The difference between the height H1 of the first section 11 and the height H2 of the second section 12 is comprised, in a preferred embodiment, between approximately 4mm and approximately 5mm, said difference being preferably of approximately 4mm. Preferably, the height H2 of the second section 12 of each ramp 10 is equal to the height Hv of the end of the flanges 13, as is the case in the embodiment shown in Figure 2.

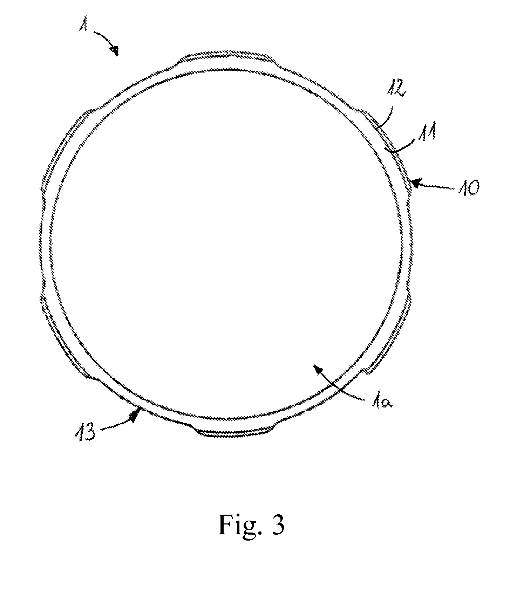

In the preferred embodiment, the distance between the radius Rv of the flanges 13 and the intermediate radius Rt is greater than the distance between said intermediate radius Rt and the exterior radius Re, although they may also be equal. In said preferred embodiment the second section 12 encloses the part of the first section 11 that projects out of the flanges 13, as shown in Figure 1. In a second embodiment, shown in Figure 3, said second section 12 encloses only the part of the first section having a radius equal to the intermediate radius Rt.

A pressure cooker with a vessel 1 according to the invention is capable of withstanding greater pressures for the same thickness of the vessel, or enables the reduction of said specific thickness, therefore withstanding the same pressure with walls that are thinner than the conventional ones.

The specific thickness that is generally used in conventional pressure cookers is approximately equal to or greater than 1.2mm, and with the preferred embodiment of the vessel 1 of the invention, said specific thickness may be reduced to 1 mm, for example. A reduction in the specific thickness of the vessel 1 to 1 mm thus enables a reduction in the amount of raw material (preferably stainless steel) required for the manufacture of a vessel 1 of these characteristics, thereby reducing the cost of manufacturing a pressure cooker with this type of vessel 1 and the environmental impact of each pressure cooker.

## Claims

1. Vessel for a pressure cooker, comprising a substantially cylindrical and hollow outline (3) and a substantially circular base (2) disposed on one of the ends of said outline (3), the outline (3) and the base (2) defining a substantially cylindrical vessel space (1 a) with a specific cavity radius (Rc) in relation to an imaginary central axis (4) disposed in the centre of said vessel space (1 a) and with a specific height (H) in relation to the base (2), the vessel (1) also comprising a plurality of ramps (10) and a flange (13) disposed between every two ramps (10), the ramps (10) and flanges (13) extending from one end of said outline (3) opposite to the end where the base (2) is disposed, in a direction substantially perpendicular to said outline (3), moving away from the imaginary central axis (4) and said ramps (10) and said flanges (13) being curved and concentric in relation to the central axis (4), the flanges (13) extending to a specific radius (Rv) in relation to the central axis (4) and the ramps (10) extending to a specific exterior radius (Re) in relation to the central axis (4), **characterised in that** the flanges (13) comprise a curved form, the end of said flanges (13) being in a height (Hv) in relation to the base (2) that is lower than the height (H) of the vessel (1).

2. Vessel according to claim 1, wherein the end of the flanges (13) is oriented in a direction substantially perpendicular to the base (2).

3. Vessel according to claims 1 or 2, wherein each ramp (10) is divided into a first section (11) and a second section (12) disposed at different heights (H1,H2) in relation to the base (2), the first section (11) having a height (H1) that corresponds with the height (H) of the vessel space (1 a) and said first section (11) extending to an intermediate radius (Rt) in relation to the central axis (4) comprised between the exterior radius (Re) and the radius (Rv) of the flanges (13), the second section (12) extending from said intermediate radius (Rt) to the exterior radius (Re).

4. Vessel according to claim 3, wherein the second section (12) has a height (H2) in relation to said base (2) that is lower than the first height (H1).

5. Vessel according to claims 3 or 4, wherein the height (H2) of the second section (12) of the ramps (10) is substantially equal to the height (Hv) of the end of the flanges (13).

6. Vessel according to claims 4 or 5, wherein the difference between the height (H1) of the first section (11) and the height (H2) of the second section (12) is comprised between approximately 4mm and approximately 5mm.

7. Vessel according to claim 6, wherein the difference between the height (H1) of the first section (11) and the height (H2) of the second section (12) is approximately 4mm.

8. Vessel according to any of claims 3 to 7, wherein the second section (12) encloses the part of the first section (11) that projects out of the flanges (13).

9. Vessel according to any of claims 3 to 7, wherein the second section (12) encloses the part of the first section (11) having the intermediate radius (Rt).

10. Vessel according to any of claims 3 to 9, wherein the distance between the radius (Rv) of the flanges (13) and the intermediate radius (Rt) is greater than the distance between said intermediate radius (Rt) and the exterior radius (Re).

11. Vessel according to any of claims 3 to 9, wherein the distance between the radius (Rv) of the flanges (13) and the intermediate radius (Rt) and the distance between said intermediate radius (Rt) and the exterior radius (Re) are equal.
